# EUROPÄISCHE PATENTANMELDUNG

(11) **EP 4 344 875 A1**
(43) Veröffentlichungstag der Anmeldung: **03.04.2024**
(21) Anmeldenummer: 22199199.5
(22) Anmeldetag: 30.09.2022
(51) Int. Cl.: B33Y 80/00, H01C 3/14, H02K 3/02, H02K 3/22, H02K 9/00, H02K 11/00, H02K 19/14, H02P 1/02

(54) **SYNCHRONMASCHINE MIT EINEM ANLAUFWIDERSTAND**

(71) Anmelder: Siemens Aktiengesellschaft, 80333 München (DE)
(72) Erfinder: Centner, Matthias, 10555 Berlin (DE); Krompasky, Erik, 25216 Nucice (CZ); Rehme, Olaf, 20148 Hamburg (DE)
(74) Vertreter: Siemens Patent Attorneys

(57) **Zusammenfassung**

Eine Synchronmaschine (1) weist einen Anlaufwiderstand auf, wobei der Anlaufwiderstand einen elektrischen Leiter aufweist, dessen spezifischer elektrischer Widerstand von Kupfer unterschiedlich ist, wobei der Anlaufwiderstand insbesondere eine Hohlstruktur aufweist.

## Beschreibung

Die Erfindung betrifft eine Synchronmaschine mit einem Anlaufwiderstand.

Beim Anlaufen von Synchronmaschinen kann ein Anlaufwiderstand als Komponente im kurzgeschlossen Rotorstromkreis verwendet werden, damit sich das Anlaufdrehmoment vorteilhaft erhöht. Ein dazu verwendetes sogenanntes "Widerstandsrad" weist einen gegebenen Widerstand und eine gegebene Wärmekapazität auf. Diese nimmt während der Phase des Anlaufs und des dabei auftretenden hohen Stroms die durch die Verlustleistung am Widerstand entstehende Wärmemenge auf, so dass sich die Temperaturerhöhung am Widerstandsrad unterhalb eines durch die verwendeten Materialien, insb. Isolationsmaterialien bestimmten Grenzwerts bewegt.

Problematisch kann dabei beispielsweise sein, dass Widerstandsräder als Rotorkomponente aus Kupferleitern mit einer insgesamt sehr hohen Masse ausgeführt werden. Dieser Umstand beeinflusst sowohl die Größe als auch die Rotordynamik der Maschine nachteilig. Dennoch kann dies notwendig sein, um die erforderliche Wärmekapazität zu realisieren. Das Widerstandsrad kann aus einer großen Masse Kupferleiter hergestellt werden, um ausreichend Wärmekapazität zu erhalten. Dabei wird der Kupferleiter in einem Rotorelement so angeordnet, dass über den Querschnitt und die Länge des Leiters der benötigte Widerstand hergestellt wird. Dies kann für ein übliches Widerstandsrad einer großen Synchronmaschine eine typische Masse von z.B. 400 kg bedeuten.

Eine Aufgabe der Erfindung ist es eine verbesserte Synchronmaschine zu gestalten.

Eine Lösung der Aufgabe ergibt sich nach Anspruch 1. Weitere beispielhafte Ausgestaltungen ergeben sich nach den davon abhängigen Ansprüchen 2 bis 9.

Eine Synchronmaschine weist einen Anlaufwiderstand auf, wobei der Anlaufwiderstand einen elektrischen Leiter aufweist, dessen spezifischer elektrischer Widerstand von Kupfer unterschiedlich ist, wobei der Anlaufwiderstand insbesondere eine Hohlstruktur aufweist. Die Hohlstruktur kann offen oder geschlossen sein. In der Hohlstruktur kann sich ein Medium befinden. Mittels der Hohlstruktur bzw. mittels Hohlstrukturen können Kühlkanäle oder geschlossene Volumina ausgebildet sein.

In einer Ausgestaltung der Synchronmaschine ist der spezifische elektrische Widerstand des elektrischen Leiters größer als der von Kupfer. So kann der Widerstandswert durch eine andere Materialwahl erhöht werden.

In einer Ausgestaltung der Synchronmaschine hat der elektrische Leiter ein geringeres spezifisches Gewicht wie Kupfer. Dies hat den Vorteil einer geringeren Trägheit.

In einer Ausgestaltung der Synchronmaschine weist der Anlaufwiderstand ein Phasenwechselmaterial auf. Das Phasenwechselmaterial kann sind in einer oder einer Vielzahl von Hohlstrukturen befinden. Durch das Phasenwechselmaterial kann Wärmeenergie insbesondere kurzfristig aufgenommen werden.

In einer Ausgestaltung der Synchronmaschine ist weist der elektrische Leiter Aluminium oder eine Aluminiumlegierung auf. Aluminium ist im Vergleich zu Kupfer ein schlechterer elektrischer Leiter, ist jedoch Leichter als Kupfer.

In einer Ausgestaltung der Synchronmaschine weist der elektrische Leiter eine Länge auf, welche die Abmessungen des Anlaufwiderstandes um ein Vielfaches überschreitet. So kann der Widerstand weiter erhöht werden.

In einer Ausgestaltung der Synchronmaschine ist der elektrische Leiter als ein Hohlleiter ausgeführt. Im Inneren des Hohlleiters kann das Phasenwechselmaterial dauerhaft gekapselt eingefüllt sein.

In einer Ausgestaltung der Synchronmaschine ist der elektrische Leiter additiv gefertigt. So können komplexe geometrische Strukturen einfach hergestellt werden.

In einer Ausgestaltung der Synchronmaschine ist der Anlaufwiderstand von einem topfartigen Element umgeben. In diesem topfartigen Element, welches eine Umstruktur bildet, kann das Phasenwechselmaterial aufgenommen sein.

Der Anlaufwiderstand lässt sich prinzipiell auch mit einem Material fertigen, das schlechter elektrisch leitet als Kupfer. Die Verwendung eines Materials mit entsprechend höherem spezifischen elektrischen Widerstand als Kupfer führt zu einem geringeren Massenbedarf dieses Materials. Allerdings ist die gesamt abzuführende Wärmemenge in der Praxis oft so hoch, dass die Wärmekapazität der reduzierten Masse nicht ausreicht, um die auftretende Höchsttemperatur am Widerstandsrad unterhalb eines gegebenen Grenzwerts zu halten, so dass eine Hohlstruktur notwendig ist. So ist beispielsweise bei einer Synchronmaschine ein erstes Material mit höherem spezifischem Widerstand als Kupfer, mit seinem daraus abgeleiteten geringeren Massenbedarf mit einem in dieses Material eingebetteten zweiten Material, einem sog. Phasenwechselmaterial, kombiniert. Phasenwechselmaterialien, wie z.B. Paraffine, weisen einerseits eine vergleichsweise hohe Wärmekapazität auf und nehmen andererseits beim Phasenwechsel Wärmeenergie auf, ohne dass sich die Temperatur weiter erhöht. Prinzipiell sind sowohl der Phasenwechsel von fest nach flüssig als auch flüssig gasförmig geeignet. Als Phasenwechselmaterial kann etwas verwendet werden, welches eine entsprechende Phasenwechsel-Temperatur oberhalb der maximal auftretenden Umgebungstemperatur und unterhalb der zulässigen Temperaturgrenze aufweist.

Als Material mit höherem spezifischen Widerstand eignet sich z.B. eine Aluminiumlegierung, die hinsichtlich ihrer Wärmekapazität ebenfalls geeignet ist und als Leichtbauwerkstoff zusätzlich den Dynamikeigenschaften des Rotors zu Gute kommt.

In einer Ausgestaltung der Synchronmaschine kann sich eine spezielle Gestaltung des Widerstandrads ergeben, die es erlaubt das Leichtbaumaterial als sehr langen Leiter so anzuordnen, dass sich ein möglichst langer Weg für den Stromfluss ergibt.

In einer Ausgestaltung der Synchronmaschine wird der Leiter als Hohlleiter ausgeführt, in dessen Inneren das Phasenwechselmaterial dauerhaft gekapselt eingefüllt wird. Um gleichzeitig das Widerstandsrad so kompakt wie möglich zu gestalten, wird insbesondere eine Gestaltung gewählt, bei der der Hohlleiter innerhalb der Umhüllenden des gesamten Widerstandrads möglichst viel Raum einnimmt. Die Umhüllende ist beispielsweise ein topfartiges Element.

Die Anordnung eines Hohlleiters gefüllt mit einem Phasenwechselmaterial hat insbesondere gegenüber einer ebenfalls denkbaren Anordnung des Leiters innerhalb eines Gefäßes gefüllt mit Phasenwechselmaterial den Vorteil, dass eine große Oberfläche geschaffen wird, die vorteilhaft für eine effektive Rückkühlung genutzt werden kann, denn der erfolgte Phasenwechsel muss möglichst schnell rückgängig gemacht werden, um weitere Anläufe der Maschine zu ermöglichen.

In einer Ausgestaltung der Synchronmaschine ergibt sich daraus für eine Rotorkomponente z.B. eine zylindrische Umhüllende des gesamten Widerstandsrads, in der ein einzelner Hohlleiter mäandrierend, spiralförmig oder auf andere Weise möglichst platzsparend angeordnet ist.

Aus diesen Ausführungen ist erkennbar, dass die oben beschriebene Gestaltung hohe Anforderungen an zu verwendende Fertigungsverfahren stellt. Es ist einerseits ein sehr langer Hohlleiter aus einem Werkstoff mit ausreichend Festigkeit bei gleichzeitig geringem Gewicht und einer hohen Genauigkeit herzustellen, damit die Rotationskräfte aufgenommen werden können und insgesamt die Rotordynamik positiv beeinflusst wird. Andererseits birgt die oben beschriebene Gestaltung eine Komplexität, die fertigungstechnisch schwierig umzusetzen ist. Eine Möglichkeit hierzu bieten die sog. additiven Fertigungsverfahren, insbesondere das sog. Laserstrahlschmelzen, bei dem ein Bauteil schichtweise mittels Laserstrahl in einem Pulverbett hergestellt wird. Dieses ermöglicht eine hohe geometrische Komplexität, wie sie die beschriebenen Hohlstrukturen bieten, umzusetzen bei gleichzeitiger Flexibilität gegenüber einem Fertigungsverfahren mit hohem Vorrichtungsaufwand. Insbesondere kann eine spezielle hochfeste Aluminiumlegierung für das Laserstrahlschmelzen verwendet werden, die die oben beschriebenen mechanischen Anforderungen besonders gut erfüllt. Auch additive Fertigungsverfahren unterliegen gewissen Fertigungsrandbedingungen. So lassen sich im Laserstrahlschmelzverfahren typischerweise keine Strukturen waagerecht im Pulverbett aufbauen, aufgrund der physikalisch notwendigen Abfuhr der vom Laser eingebrachten Wärmeenergie. Insofern ergibt sich als vorteilhafte Gestaltung für den Hohlleiter eine Anordnung in hauptsächlich axialer Richtung.

Die Merkmale der einzelnen beanspruchten bzw. beschriebenen Gegenstände sind ohne Weiteres miteinander kombinierbar. Im Folgenden wird die Erfindung beispielhaft anhand von Figuren näher dargestellt und erläutert. Die in den Figuren gezeigten Merkmale können fachmännisch zu neuen Ausführungsformen kombiniert werden, ohne die Erfindung zu verlassen. Es zeigen
- Fig 1: eine spiralförmige Anordnung eines Hohlleiters,
- FIG 2: eine mäandrierende Anordnung eines Hohlleiters,
- FIG 3: einen Hohlleiter mit kreisringsektorförmigen Querschnitt,
- FIG 4: ein topfförmiges Element als Umstruktur,
- FIG 5: Hohlleiter mit einem minimalen Support zu einer Bauplattform,
- FIG 6: eine elektrische Kontaktierung der Hohlleiter,
- FIG 7: eine Anordnung eines Hohlleiters für eine verbesserte Entpulverung,
- FIG 8: Lüfterelemente zur Kühlung und
- FIG 9: eine Verstärkung des Hohlleiters durch eine Gitterstruktur und

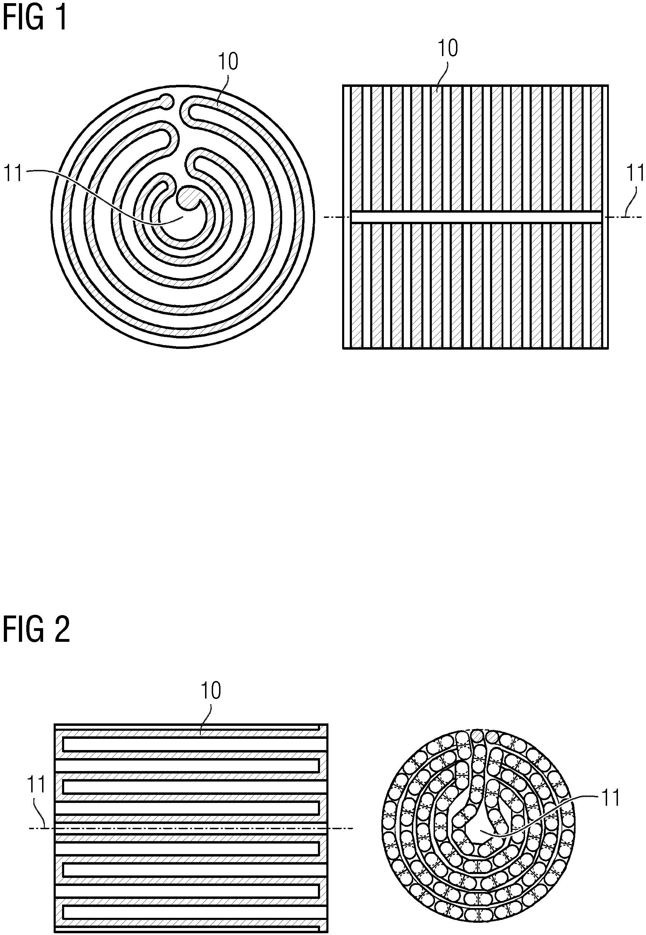

Die Darstellung nach Figur 1 zeigt eine spiralförmige Anordnung eines Hohlleiters 10 aus zwei Perspektiven, in einer axialen Aufsicht und einer radialen Aufsicht. Axial, bezogen auf die Achse 11, ergibt sich eine Aneinanderreihung mehrerer Mäanderscheiben. Hieraus ergibt sich eine zylindrische Umhüllende des gesamten Widerstandsrads, in der ein einzelner Hohlleiter mäandrierend, spiralförmig oder auf andere Weise möglichst platzsparend angeordnet ist.

Die Darstellung nach Figur 2 zeigt eine spiralförmige Anordnung eines Hohlleiters 10. Die Mäander sind so um die Achse 11 gewickelt.

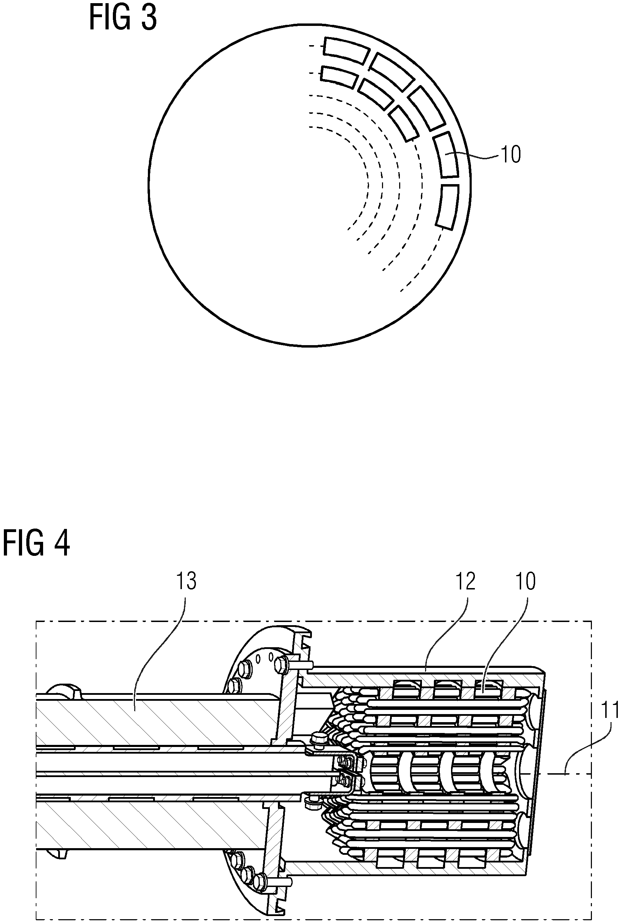

Die Darstellung nach Figur 3 zeigt einen Hohlleiter 10 mit kreisringsektorförmigen Querschnitt. Eine platzsparende Gestaltung ergibt sich also z.B. auch, indem ein Querschnitt in Form eines Kreisringsektors anstatt einem runden Querschnitt für den Hohlleiter gewählt wird, so dass die Spalte zwischen benachbarten Gängen des Hohlleiters minimal ausfallen. Gleichzeitig kann der Hohlleiter so angeordnet werden, dass die sich ergebende Rotorkomponente eine möglichst geringe Unwucht aufweist.

Die Darstellung nach Figur 4 zeigt einen Anlaufwiderstand mit einem topfartigen Element 12, welches an der Welle 13 befestigt ist. Der Start- und der Endpunkt des Hohlleiters 10 liegen dabei an einer der beiden Stirnseiten der zylindrischen Umhüllenden, damit dort auf einfache Weise Strom ein- und wieder ausgeleitet werden kann. Andere Anordnungen (Verteilung auf beide Stirnseiten und/oder über die Mantelfläche) sind auch möglich und werden hier in der Figur nicht dargestellt.

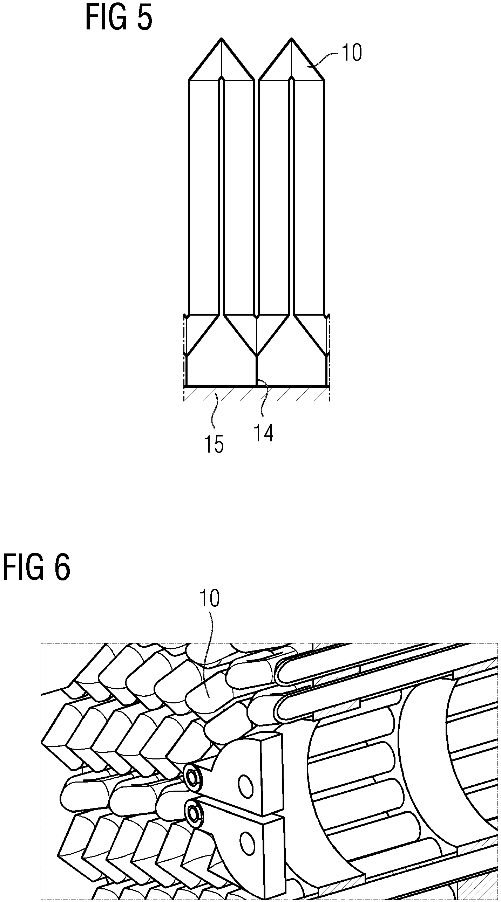

Die Darstellung nach Figur 5 zeigt einen Hohlleiter 10, welcher über Halter 14 als einen minimalen Support an einer Bauplattform 15 ist.

Die Darstellung nach Figur 6 zeigt eine Vielzahl von additiv gefertigten Hohlleitern. Vorteilhaft ist eine Ausführung der Verbindung von benachbarten Gängen des Hohlleiters durch spitz verlaufende Verbindungsrohre, die eine additive Herstellung bei gleichzeitig minimaler Anforderung an eine Bauteilabstützung auf der Unterseite erlaubt was auch in Figur 5 dargestellt ist. Weiterhin kann es vorteilhaft sein, dass ein additiv hergestelltes Widerstandsrad in einem Stück als komplex aufgebauter langer Hohlleiter zugleich mit Elementen für z.B. eine Welle-Nabe-Verbindung, für Flansche und für die elektrische Kontaktierung hergestellt werden kann.

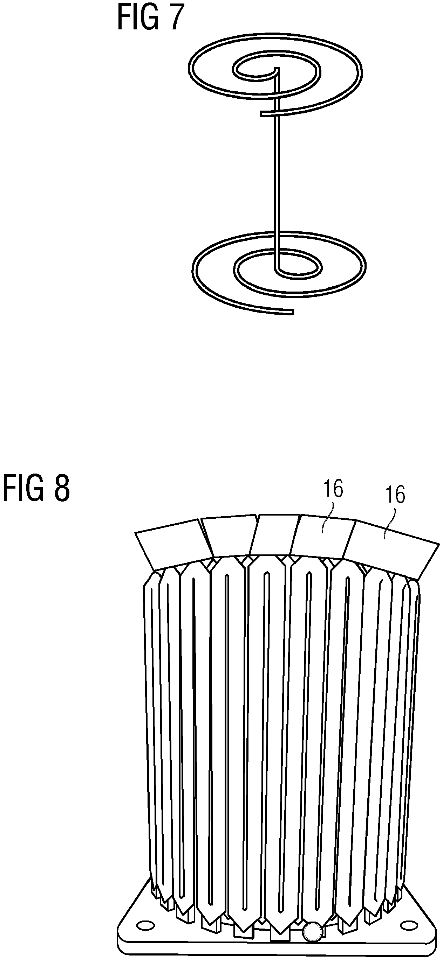

Ein additiv hergestelltes Widerstandsrad ist beispielsweise unmittelbar nach seiner Herstellung im Inneren des Hohlleiters noch mit nicht erschmolzenem Pulver befüllt. Vor einer Befüllung mit Phasenwechselmaterial, muss das Pulver vollständig entfernt werden. In einer Struktur, die stark mäandrierend und verschachtelt aufgebaut ist, kann dieses einen sehr hohen Aufwand bedeuten. Im Sinne einer möglichst unaufwändigen Entpulverung ist daher eine Gestaltung vorteilhaft, die eine spiralförmige Anordnung des Hohlleiters vorsieht, bei der die die Entpulverung durch bloßes axiales Drehen der Gesamtstruktur durchgeführt werden kann. Dies ist in Figur 7 dargestellt. Andere Gestaltungen machen komplexe mehrachsige Bewegungen erforderlich zur Durchführung einer Entpulverung. Die gleichzeitige Forderung nach einer guten additiven Herstellung (z.B. mit der axialen Richtung als Aufbaurichtung) und einer guten Entpulverung zeigt eine Struktur gemäß Figur 7.

Zwecks mechanischer Stabilisierung der oben beschriebenen additiv hergestellten Rotorkomponente im Betrieb bei typischen Nenndrehzahlen von z.B. 1800 oder 3600 UPM, wird diese, z.B in eine topfförmige Umstruktur, eingebettet und die Zwischenräume mit einem elektrisch isolierenden Harz gefüllt (siehe hierzu Figur 4). Das Harz erfüllt dabei sowohl die Funktion der Isolierung einzelner Gänge des Hohlleiters als auch der Isolierung gegenüber der topfförmigen Umstruktur. Dabei wird die Struktur z.B. lediglich teilweise mit Harz gefüllt (z.B. segmentweise in der Form von Scheiben), so dass eine Luftzirkulation in den übrigen Bereichen einen Wärmeabtransport erlaubt (Zeichnung 6) im Sinne der o.g. effektiven Rückkühlung. Vorteil einer additiven Fertigung der erfindungsgemäßen Rotorkomponente ist, dass weitere komplexe Geometriebestandteile in einem Fertigungsschritt mit hergestellt werden können.

Additiv können z.B. auch Flügelradstrukturen 16 gestaltet werden, die der in Drehung befindlichen Struktur Kühlluft für eine bessere Entwärmung zuführen, wie dies in Figur 8 dargestellt ist.

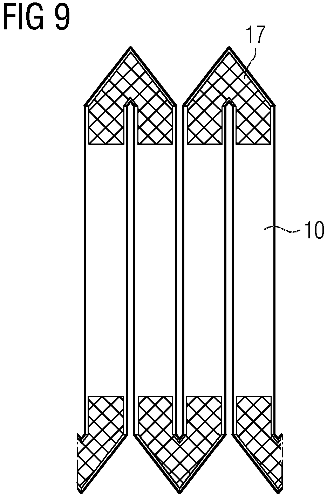

Zwecks Optimierung der eigentlichen Funktion der Komponente (elektrischen Widerstand leisten) ist es von Interesse den Querschnitt des Hohlleiters möglichst gering auszuführen, dennoch aber die gesamte Struktur der Rotorkomponente möglichst steif zu gestalten, insbesondere da diese als ein langer, vielfach gefalteter Hohlleiter vorliegt, bei der benachbarte Gänge sich nicht abstützen können. Somit unterliegt die Struktur der Rotorkomponente einer Flexibilität. Um diese einzuschränken kann der Hohlleiter im Inneren verstärkt werden, z.B. durch das Einbringen einer Gitterstruktur, die das Volumen ganz oder teilweise ausfüllt. Die Gitterstruktur kann, insbesondere wenn sie im Bereich der Verbindung zweier benachbarter Gänge des Hohlleiters vorgesehen ist, dort vorteilhaft zwischen den Gängen auftretenden Torsionsmomenten entgegen wirken. Eine Gitterstruktur 17 ist in Figur 9 dargestellt.

## Patentansprüche

1. Synchronmaschine (1) mit einem Anlaufwiderstand, wobei der Anlaufwiderstand einen elektrischen Leiter aufweist, dessen spezifischer elektrischer Widerstand von Kupfer unterschiedlich ist, wobei der Anlaufwiderstand insbesondere eine Hohlstruktur aufweist.

2. Synchronmaschine (1) nach Anspruch 1, wobei der spezifische elektrische Widerstand des elektrischen Leiters größer ist als der von Kupfer.

3. Synchronmaschine (1) nach Anspruch 1 oder 2, wobei der elektrische Leiter ein geringeres spezifisches Gewicht als Kupfer hat.

4. Synchronmaschine (1) nach einem der Ansprüche 1 bis 3, wobei der Anlaufwiderstand ein Phasenwechselmaterial aufweist.

5. Synchronmaschine (1) nach einem der Ansprüche 1 bis 4, wobei der elektrische Leiter Aluminium oder eine Aluminiumlegierung aufweist.

6. Synchronmaschine (1) nach einem der Ansprüche 1 bis 5, wobei der elektrische Leiter eine Länge aufweist, welche die Abmessungen des Anlaufwiderstandes um ein Vielfaches überschreitet.

7. Synchronmaschine (1) nach einem der Ansprüche 1 bis 6, wobei der elektrische Leiter als ein Hohlleiter ausgeführt ist.

8. Synchronmaschine (1) nach einem der Ansprüche 1 bis 7, wobei der elektrische Leiter additiv gefertigt ist.

9. Synchronmaschine (1) nach einem der Ansprüche 1 bis 8, wobei der Anlaufwiderstand von einem topfartigen Element umgeben ist.
